# EUROPEAN PATENT SPECIFICATION

(11) **EP 1 271 436 B1**
(45) Date of publication and mention of the grant of the patent: **02.05.2007**
(21) Application number: 02254344.1
(22) Date of filing: 21.06.2002
(51) Int. Cl.: G07F 19/00, G07C 9/00, G06F 1/00, G07F 7/10

(54) **A mobile terminal authentication method and a mobile terminal therefor**
Verfahren zum Beglaubigen eines mobilen Endgerätes und entsprechendes mobiles Endgerät
Méthode d'authentification de terminal mobile et terminal mobile correspondant

(30) Priority: 25.06.2001 JP 2001191645
(43) Date of publication of application: 02.01.2003
(73) Proprietor: NTT DoCoMo, Inc., Tokyo 100-6150 (JP)
(72) Inventor: Maeda, F., Intel. Prop. Dept. NTT DoCoMo, Inc., Tokyo 100-6150 (JP); Yazaki, H., Intel. Prop. Dept. NTT DoCoMo, Inc., Tokyo 100-6150 (JP); Higuchi, T., Intel. Prop. Dept. NTT DoCoMo, Inc., Tokyo 100-6150 (JP)
(74) Representative: Rees, Alexander Ellison

(56) References cited:
- WO-A-01/42938
- WO-A-99/56429
- WO-A-03/007538
- GB-A- 2 348 309
- US-A- 5 764 789

## Description

### BACKGROUND OF THE INVENTION

### 1. Field of the Invention

The present invention generally relates to mobile terminal authentication methods and mobile terminals therefor, and specifically relates to a user authentication method employed when doing commercial transactions such as electronic commerce and mobile banking via a mobile communication network and a general communication network such as the Internet, and relates to a mobile terminal for such an authentication method.

### 2. Description of the Related Art

In recent years, in the wake of a rapid proliferation of mobile phones, electronic commerce using mobile phones is becoming more and more popular among the general public including the consuming public. Electronic commerce includes electronic purchase over a communication network such as the Internet and mobile banking capable of checking bank balances and depositing/withdrawing money on line. Electronic commerce such as e-shopping over a communication network such as the Internet requires an individual authentication when settling the transaction online. This individual authentication is to confirm whether a communicating party is really the accepted person himself/herself. A typical authentication is accomplished by a password authentication method. In the password authentication method, a combination of a user ID and a password is used for authentication or collation. The password method is also used for login to an electronic system as well as e-commerce over a communication network. Other authentication technologies using biometric information such as fingerprints are being much discussed these days. For example, Japanese Patent Laid-open Publications Nos. 4-352547 and 4-352548 disclose an authentication technology in which fingerprint authentication is carried out in a mobile phone and calling from an individual phone number is allowed only when the phone number is successfully authenticated. Further, Japanese Patent Laid-open Publications Nos. 2000-307715 and 2000-59501 propose an authentication technology in which acceptance/rejection of calling from a mobile phone is controlled based on a result of biometric information (fingerprint, iris) collation.

However, the individual authentication of these technologies is preformed in a mobile phone in order to make mobile phone functions valid/invalid. Other existing individual authentication technologies are for example disclosed by the UK patent GB-A-2 348309, which uses a biometric identification for sending secret user information from a portable device to an authentication executing device.

The above referenced technologies cannot realize personal or individual authentication in servers by which financial institutions or shops settle transactions over a communication network. Therefore, whenever mobile terminal users conduct e-commerce or mobile banking over mobile communication network (e.g. PDC-P network), they have to input user data (e.g. user data = user ID and password) into their mobile terminals and transmit the user data to a settlement server each time. The user data are different from bank to bank or from e-shop to e-shop. In the settlement server, user authentication is carried out based on the user ID and password sent from the mobile terminal.

As mentioned above, when mobile terminal users conduct e-commerce or mobile banking over a communication network, they have to find out a unique user ID and password for each transaction and input them into their mobile phones manually and send them. Further, mobile terminal users have to strictly administer each user ID and password for each bank or shop respectively. It is burdensome for users having various transactions to administer user IDs and passwords so they are not stolen by others. And after finding out the correct user ID and password with some difficulty, it is burdensome to input them manually, especially so when the user has mistakenly input the user ID and password and has to input them again from the beginning.

### SUMMARY OF THE INVENTION

Accordingly, it is one object of the present invention to provide a mobile terminal authentication method used for utilizing a service supplied from an information server to a mobile terminal communicating with the information server via a radio path, the mobile terminal authentication method authenticating the mobile terminal based on a user's biometric information by which the information server identifies the mobile terminal, the method comprising:
a registration step for previously registering the user's biometric information in the mobile terminal and the information server;
a first authentication step by the mobile terminal, carrying out an authentication using biometric information representing user's biometric characteristic and read by a reading device, and the previously registered user's biometric information; characterised in that it further comprises:
   a transmitting step by the mobile terminal, transmitting the user's biometric information read by the reading device to the information server only when the biometric information read by the reading device coincides with the previously registered user's biometric information and an authentication step by the information server, carrying out a second authentication of the transmitted user data information using the user's biometric information transmitted by the mobile terminal, and the previously registered user's biometric information in the information server.

In addition, the mobile terminal authentication method further comprises a determining step by the mobile terminal, counting the number of the authentications carried out when the user's biometric information read by the reading device coincides with the previously registered user's biometric information, and determining whether the number of the authentications carried out exceeds a predetermined number; and a collation step at the mobile terminal, inputting a personal identification number (PIN) when the number of the authentications carried out is determined to exceed the predetermined number, and collating the input PIN with a previously registered PIN. In addition, the mobile terminal previously registers a combination and sequence of a plurality of user's biometric information sets as the user's biometric information; the mobile terminal carries out then authentication using the previously registered user's biometric information and a plurality of user's biometric information sets read by the reading device; and the mobile terminal considers the user to be an authorized user when the plurality of user's biometric information sets read by the reading device are determined to coincide with the previously registered user's biometric information.

Another object of the present invention is to provide a mobile terminal communicating with an information server via a radio path to utilize a service supplied from the information server, the mobile terminal being authenticated by the information server based on a user's biometric information by which the information server identified the mobile terminal , the user's biometric information being previously registered in the mobile terminal and the information server, the mobile terminal comprising:
an individual authentication unit for carrying out an authentication using user's biometric information read by a reading device, and the previously registered user's biometric information; and characterised by further comprising:
   a transmission unit for transmitting the user's biometric information read by the reading device to the information server, for the purpose of authentication in the information server only when the user's biometric information read by the reading device is considered to coincide with the previously registered user's biometric information.

In addition, the mobile terminal further comprises an authentications number determining unit for counting the number of the authentications carried out when the user's biometric information read by the reading device coincides with the previously registered user's biometric information, and determining whether the number of the authentication carried out exceeds a predetermined number; and a personal identification number(PIN) collation unit for receiving a PIN when the number of authentication carried out is determined to exceed the predetermined number, and collating the received PIN with a previously registered PIN. The mobile terminal further comprises a biometric information registration unit for registering a combination and sequence of a plurality of user's biometric information sets as the user's biometric information; a biometric information authentication unit for carrying out the authentication using the previously registered user's biometric information and a plurality of user's biometric information sets read by the reading device; and a biometric information determining unit for determining whether the plurality of user's biometric information sets read by the reading device coincides with the previously registered user's biometric information.

Features and advantages of the present invention will be set forth in the description, which follows, and in part will become apparent from the description and the accompanying drawings, or may be learned by practice of the invention according to the teachings provided in the description. Objects as well as other features and advantages of the present invention will be realized and attained by an apparatus particularly pointed out in the specification in such full, clear, concise, and exact terms as to enable a person having ordinary skill in the art to practice the invention.

### BRIEF DESCRIPTION OF THE DRAWINGS

FIG. 1 shows a communication system that an embodiment of the present invention can be applied to;
FIG. 2 is a block diagram of a mobile terminal shown in FIG. 1;
FIG. 3 is a flowchart showing a process of initially registering a fingerprint according to the present invention;
FIG. 4 is a flowchart showing a process of registering user data according to the present invention;
FIG. 5 shows a user data administration table according to the present invention;
FIG. 6 is a flowchart showing a process of initially registering user data into an information server according to Example 1 of the present invention;
FIG. 7 shows a display of the mobile terminal when sending user data;
FIG. 8 is a flowchart showing a process of using authentication according to Example 1 of the present invention;
FIG. 9 is a flowchart showing a process of initially registering a fingerprint in a server according to Example 2 of the present invention;
FIG. 10 is a flowchart showing a process of using authentication according to Example 2 of the present invention;
FIG. 11 is a flowchart showing a process of entering the fingerprint authentication request mode according to Example 2 of the present invention;
FIG. 12 is a flowchart showing a case where the fingerprint authentication gives multiple times of NG (No Good) according to Example 2 of the present invention;
FIG. 13 is a flowchart showing a process of initially registering multiple fingerprints according to Example 2 of the present invention; and
FIG. 14 is a flowchart showing a process of authenticating multiple fingerprints according to Example 2 of the present invention.

### DESCRIPTION OF THE PREFERRED EMBODIMENTS

In the following, embodiments of the present invention will be described with reference to the accompanying drawings.

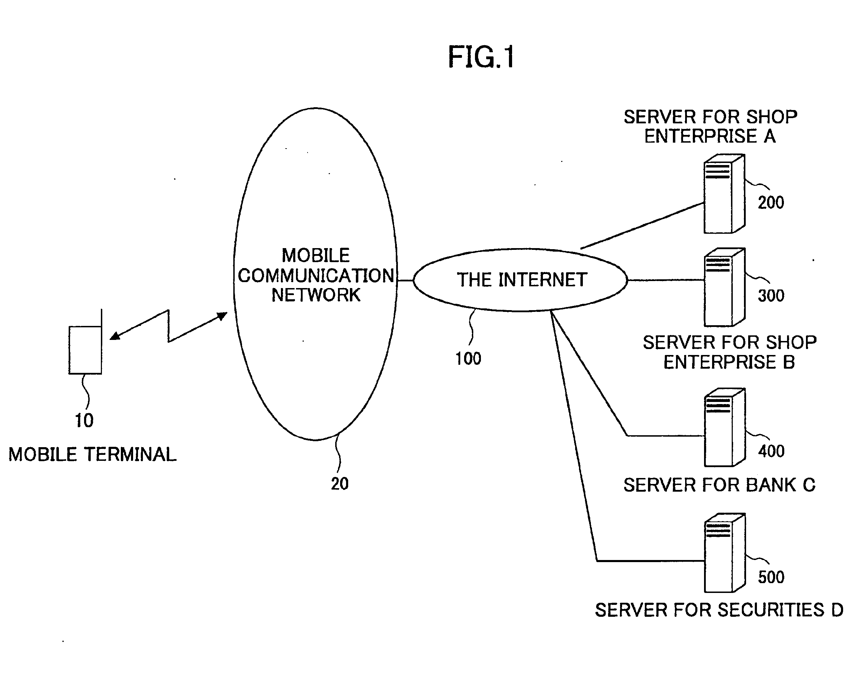

FIG. 1 shows a communication system to which a mobile terminal authentication method of the embodiment of the present invention is applied.

In this communication system shown in FIG. 1, a user can communicate with servers 200, 300, 400 and 500 through a mobile terminal 10 over a mobile communication network 20 (e.g. PDC-P(Personal Digital Cellular-Packet) network) and a general communication network such as the Internet 100. The servers 200 and 300 can be used by e-shops or business enterprises for settling commercial goods sales, and referred to later as a "server 200 for shop enterprise A" and a "server 300 for shop enterprise B" respectively. The servers 400 and 500 can be used by a bank and a securities company for settling their financial accounts, and therefore referred to later as a "server 400 for bank C" and a "server 500 for securities D", respectively. In each server, respective transaction settlement is carried out based on individual authentication. In FIG. 1, the mobile terminal 10 can radio-communicate with a radio node (e.g. a radio base station, not shown) in the PDC-P network 20, and communicate with each of servers 200-500 via the Internet 100 for respective settlements. In the mobile terminal 10 and each server 200-500 as a commercial transaction party, individual authentication is carried out in order to verify identity when doing commercial business.

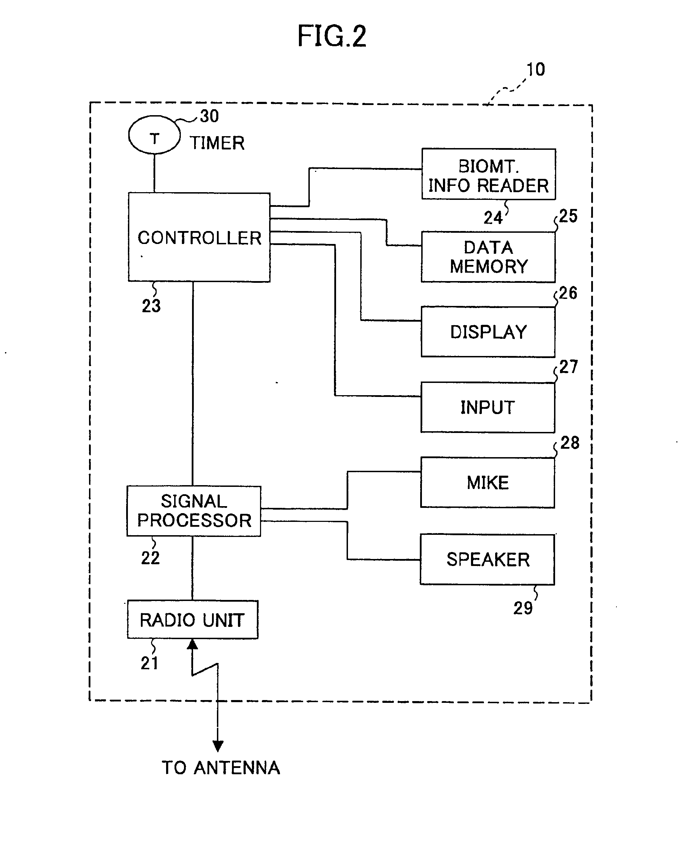

Referring to FIG. 2, the mobile terminal 10 comprises a radio unit (RF/IF) 21, a signal processor 22, a controller 23, a biometric information reader 24, a data memory 25, a display 26, an input unit 27, a microphone 28, a speaker 29 and a timer 30.

The radio unit 21 modulates a base band signal output from the signal processor 22, and converts it to a radio frequency signal. The radio unit 21 also demodulates a radio frequency signal received at the antenna and converts it to a base band signal. The signal processor 22 performs voice-encoding process on an analog voice signal input mainly at the microphone 28 to covert it to a digital signal. The biometric information reader 24 reads biometric information such as a fingerprint, a retina pattern, a voiceprint, a face line and the like input at a predetermined input unit(not shown) and transmits it to the controller 23. The timer 30 is used for setting time for monitoring input leaving at the input unit 27.

The controller 23 controls each unit in the mobile terminal 10. For example, the controller performs an extracting process on the biometric information transmitted from the biometric information reader 24, and transmits characteristic data extracted out in the extracting process to the data memory 25. The data memory 25 stores the characteristic data. In this embodiment, the raw biometric data from the biometric reader 24 is not stored as it is, but the characteristic data are stored after the controller 23 has extracted biometric features out. However, the data memory 25 may store the raw biometric data.

The controller has an authentication function of collating the biometric information input from the biometric reader 24 with the biometric information stored in the data memory 25.

The controller 23 is connected to the input unit 27 for inputting phone numbers and various commands, and connected to the display 26 for showing various data and information necessary for individual authentication according to the present invention.

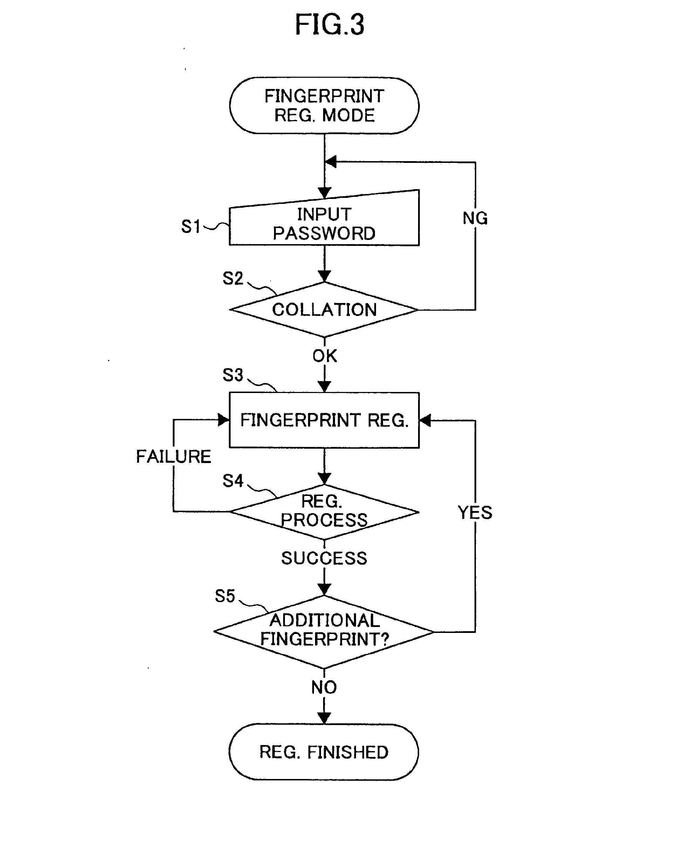

FIG. 3 shows a process for initially registering biometric information (=data) used for the mobile terminal authentication according to the present invention. The biometric information includes fingerprints, retina patterns, face outlines, voiceprints and the like. In this embodiment, fingerprints are utilized as the biometric information.

In FIG. 3, when a user activates the mobile terminal 10, a menu list appears on the display 26. When the user selects a fingerprint registration mode from the menu list, a password requesting screen appears. The user inputs his/her password at step S1, and then the controller 23 collates the input password with a password previously registered in the data memory 25 by the user at step S2. If the controller 23 determines "OK" in the collation step (S2), the process goes to the next step (S3). If the controller 23 determines "NG" (No Good), the process returns to the password requesting screen.

When the collation result is "OK", fingerprint information (referred to as "fingerprint data" later) is registered at the step S3. The fingerprint data registration process is accomplished as follows.

The user places his/her own finger on a predetermined portion of the biometric information reader 24, and then the fingerprint data are read by the biometric information reader 24. The read fingerprint data are extracted by the controller 23 and sent to the data memory 25 for storing.

In this manner, the user's fingerprint data are normally (correctly) registered in the data memory 25 at step S4. After successful registration of the fingerprint (S4), it is determined whether there exists an additional fingerprint to be registered at step S5. If it is determined at step S5 that there exists an additional fingerprint to be registered, then the process goes back to step S3 and repeats steps S3, S4 and S5 to register all remaining fingerprints. If it is determined at step S5 that there is no additional fingerprint to be registered, then the registration process is finished. If the fingerprint is not normally (correctly) registered in the data memory 25 (Step S4), then the fingerprint reading and registering process is performed again (S3). In this embodiment, the total number of fingerprints to be registered is assumed to be 3. Therefore, the initial registration process is not finished until all the data for all three fingerprints are correctly registered. The determining step S5 determines whether the number of registered fingerprints reaches 3 or not.

The registered fingerprint data can be deleted after inputting the password into the mobile terminal in the same manner as in the registration process mentioned above.

After the fingerprints are successfully registered in the data memory 25 in the mobile terminal 10, user data are registered in the mobile terminal 10. User data, also referred to as personal identification number (PIN), means data to be used for verifying identity. A format of the user data is composed of, for example, 10 characters or less of user ID plus 10 characters or less of password. In this embodiment, the maximum number of registrable user data characters is assumed to be 10. Each user data set (user ID plus password) is assigned by one of the servers 200-500 at a mobile terminal user's request. It is assumed that the user data have been already assigned by servers 200-500 for explanatory purposes in this embodiment.

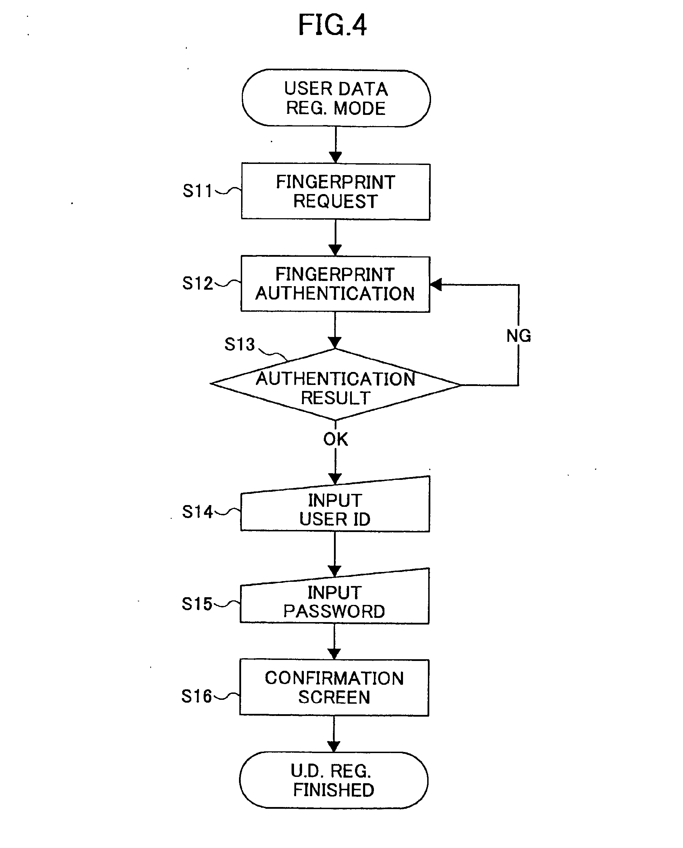

FIG. 4 shows a process for registering the user data in the mobile terminal 10. In FIG. 4, the user can enter into a user registration mode by performing a predetermined input operation on the mobile terminal 10, and then the fingerprint request appears on the display 26 at step S11. At step S12, predetermined fingerprint authentication is carried out. In this step S12 of fingerprint authentication, the user can cause the mobile terminal 10 to read his/her fingerprint and store the fingerprint data in area B of the data memory 25. The previously registered fingerprint data are assumed to be stored in area A of the data memory 25. The controller 23 reads out the registered fingerprint data from area A of the data memory 25 and user's fingerprint data from area B of the data memory 25, and collates them. If the controller 23 determines the authentication to be "OK", then the process goes to the next step (S14). On the other hand, if the controller 23 determines the authentication to be "NG", then the process returns to the step S12 and starts the authentication process again.

After the authentication is determined "OK" at the step S13, the user can input his/her user data (user ID and password) at the input unit 27. The user ID and password have been previously assigned by the server 200 for shop enterprise A. The user inputs his/her user ID at step S14 and password at step S15. The user sees the display 26 showing the input user data to confirm that the input user data have no errors at step S16. If the input user data are confirmed to have no errors, the user finally fixes the input user data to be entered into the mobile terminal 10 for registration by hitting an "input fixed" button. In this embodiment, the user ID is used as the user data name by default setting. In this way, the registration of the user data assigned by the server 200 for shop enterprise A is completed.

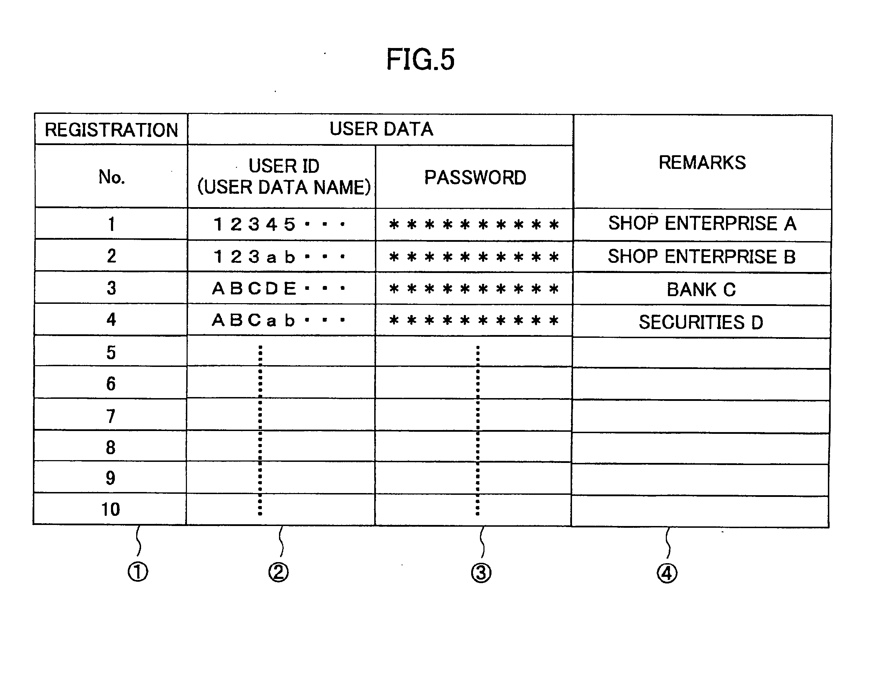

Next, other user data assigned by server 300 for shop enterprise B, server 400 for bank C and server 500 for securities D can be input to the mobile terminal 10 and registered therein. After all the registrations are completed, all the user data are held in the data memory 25 as a table (referred to as a "user data administration table") shown in FIG. 5.

The user data administration table shown in FIG. 5 is like a telephone directory. When a desired registration number is designated, its user ID and password appear on the display 26 for confirmation. This table contains registration numbers (1), user IDs(2), passwords (3) and remarks (4) from the left to the right.

In this example shown in FIG. 5, a user ID "12345.. .." and a password for the shop enterprise A are registered as the first user data (Reg. No. 1). A user ID "123ab.. .." and a password for the shop enterprise B are registered as the second user data (Reg. No. 2). A user ID "ABCDE.. .." and a password for the bank C are registered as the third user data (Reg. No. 3). A user ID "ABCab.. .." and a password for the securities D are registered as the fourth user data (Reg. No. 4).

In this manner, according to this embodiment, the user data are previously registered in the user data administration table. Therefore, the user can easily ascertain the user ID and password necessary for a desired transaction party, by only calling up the user data administration table and designating the corresponding registration number.

As explained above, user data can be registered only after the fingerprint authentication has been successfully carried out. Further the correction and deletion of the registered user data also need the fingerprint authentication, and therefore high security can be kept.

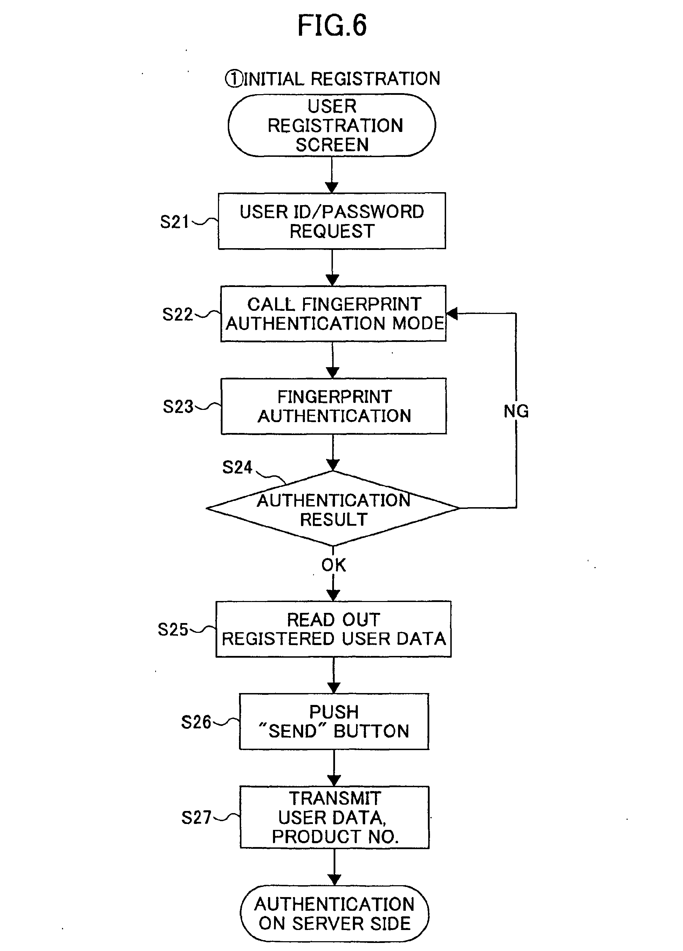

Next, referring to FIG. 6, a transaction example 1 according to the present invention will be explained, in which commercial transactions such as e-commerce and mobile banking are accomplished over a communication network based on fingerprint authentication.

A process for previously (initially) registering user data in a server, using server 200 for shop enterprise A, will be explained. The server 200 is used as one example for explanatory purposes, and the present invention can be applied to any kind of sever.

### Example 1

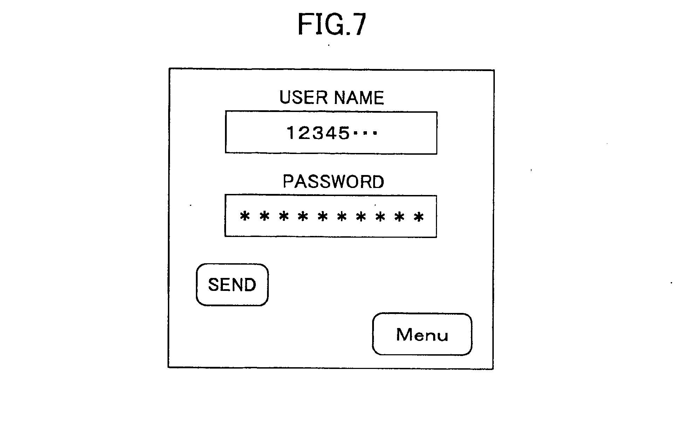

FIG. 6 shows a process for initially registering user data to the server 200. The mobile terminal 10 at first shows a user registration screen on the display 26. The mobile terminal user can select a user ID/password requesting screen (S21) from the registration screen. Then the user hits a menu button without inputting a user ID/password, to display a menu screen. Fingerprint authentication can be called and selected on the menu screen at step S22. After being selected, fingerprint authentication is carried out at step S23. If the result of the fingerprint authentication is "OK" at step S24, the process goes to step S25. At step S25, the controller 23 reads out one set of previously registered user data from the data memory 25, which is designated by the user. In this Example 1, the user data set for the server 200 for shop enterprise A is read out. The read out user data set is displayed on the display 26. For example, the display 26 displays user name and password as shown in FIG. 7.

The mobile terminal user confirms that the user data set (user name and password) displayed on the display 26 is the desired one, and hits a "SEND" button (S26) at the lower left corner of the display 26 (FIG. 7). In this way, the user data (user ID and password) and production serial number of the mobile terminal 10 are transmitted to the server 200 for shop enterprise A (S27).

The server 200 for shop enterprise A registers the user data and the production serial number and therefore becomes able to authenticate the mobile terminal 10 on the server side.

After the user data and the production number received from the mobile terminal 10 are initially registered in the server 200 for shop enterprise A as explained above, the user can electronically settle transactions regarding e-commerce or mobile banking.

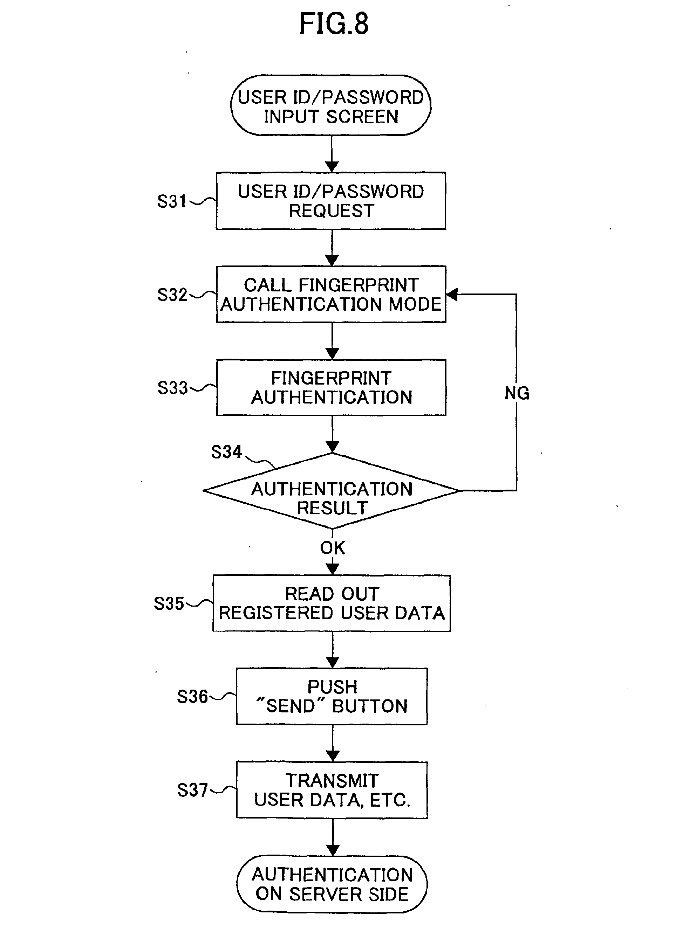

Referring to FIG. 8, a procedure for electronically settling will be explained. In this example, it is assumed that the mobile terminal user orders some goods from the shop enterprise A having a cyber shop on a communication network, and electronically pays or settles for the purchased goods over the communication network.

The mobile terminal user browses a goods catalog established on the server 200 for shop enterprise A. If the user finds goods that he/she wants to buy, he/she inputs the item numbers of the desired goods on a predetermined screen to be able to purchase the goods. After the user decides to purchase the desired goods in this way, the mobile terminal 10 sends a settlement requesting signal to the server 200 for shop enterprise A. Then the server 200 for shop enterprise A requests the mobile terminal 10 to send a user ID and password.

In FIG. 8, the mobile terminal user receives the request for user ID and password (S31), and calls up a menu list screen that includes fingerprint authentication mode and selects the fingerprint authentication mode (S32). Being selected in this manner, the fingerprint authentication is processed at step S33. If the result of the fingerprint authentication is "OK" at step S34, the controller 23 reads out the designated user data set from the data memory 25 at step S35. For example, the user can refer to the user data administration table shown in FIG. 5 like a phone directory, and read out the user data (user ID "12345.. .." and password "**********") for the shop enterprise A.

After the user data set is read out by the controller 23, the display 26 of the mobile terminal 10 displays a confirmation screen as shown in FIG. 7. The user confirms that the user data (user name and password) displayed in this screen are the correct ones, and pushes a button "SEND" appearing at the lower left corner of the display 26 (S36). When the button is pushed in this manner, the mobile terminal 10 transmits the following information to the server 200 for shop enterprise A at a step S37:
1) User data (user ID and password) ;
2) Production number of the mobile terminal;
3) Information identifying fingerprint authentication algorithm; and
4) Version information of the fingerprint authentication algorithm.

It is assumed that an administrator of the server 200 for shop enterprise A has previously downloaded the fingerprint authentication algorithm for allowing authentication and the version information of the fingerprint authentication in the server 200. The server 200 for shop enterprise A performs an individual authentication based on the information 1) through 4) above sent from the mobile terminal 10, and carries out a predetermined process such as financial settlement only when the individual authentication results in "OK".

As mentioned above, according to this example, the mobile terminal 10 at first performs a fingerprint authentication therein, and then reads out and sends user data (user ID and password) to the server 200 only when the fingerprint authentication results in OK. Then the server 200 for shop enterprise A receives the fingerprint authentication algorithm and the version information of the algorithm in addition to the user data and production number of the mobile terminal 10, therefore the server can confirms that the transmitter is the correct mobile terminal 10 authenticated by the fingerprint authentication. And the fingerprint authentication is required for reading the user data, and therefore high security is kept while the process of reading and sending the user data is convenient. Compared to manually inputting the user data, the process of this example saves user's tasks and reduces the burden on the user. Further, the server 200 may specify a particular authentication algorithm in advance. And the server 200 can only authenticate user data that was authenticated by the mobile terminal 10 using the specified authentication algorithm. And the server 200 can reject the user data that is authenticated by the mobile terminal 10 using an authentication algorithm which version is older than a predetermined one. In this manner the level of security can be increased.

In the above explained Example 1, only the information items 1) through 4) above are sent to the server 200 for shop enterprise A. The present invention is not limited to this. Biometric information can be sent "as is" from the mobile terminal 10.

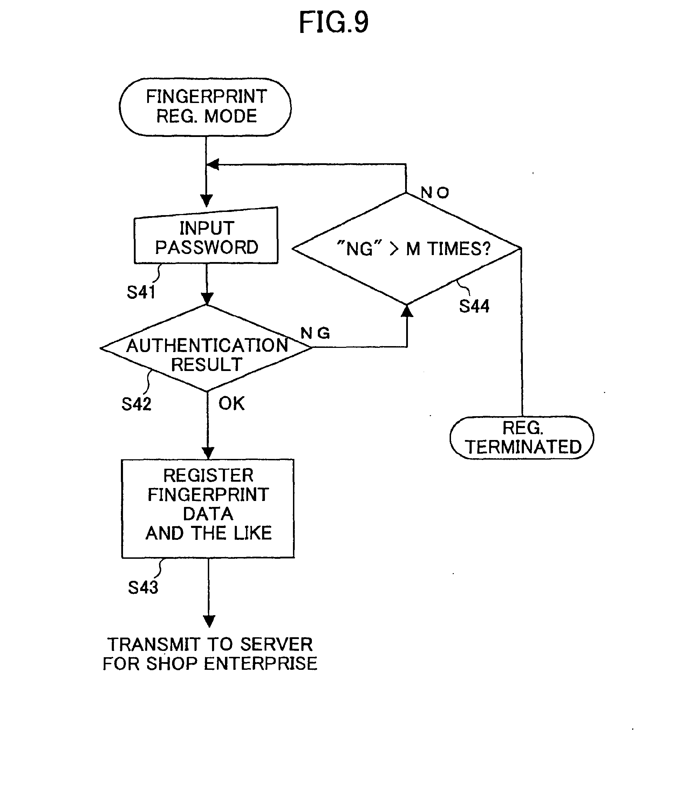

Another example according to the present invention will be explained below with reference to FIG. 9, in which the biometric data are sent "as is" from the mobile terminal 10 to a server for mobile terminal authentication.

### Example 2

In FIG. 9, at first the user activates the mobile terminal 10 and selects the fingerprint authentication menu. And then the password input requesting screen appears on the display 26. The user inputs his/her password at step S41. The controller 23 collates (authenticates) the input password with a password previously registered in the data memory 25 at step S42. If the authentication result is "OK" at step S42, the process goes to step S43, where fingerprint data and the like are registered. This fingerprint registration is done such that a fingerprint read by the biometric information reader 24 is processed by the controller 23 to obtain data such as a fingerprint image representing fingerprint features. Thus obtained data are stored in the data memory 25 (S43). In this Example, fingerprint image is taken to mean fingerprint data to be stored in the data memory 25.

After the above fingerprint image is normally (correctly) stored in the data memory 25 (S43), the mobile terminal 10 transmits the registered fingerprint image to the server 200 for shop enterprise A. The fingerprint image sent from the mobile terminal 10 is received and registered by the server 200 for shop enterprise A.

On the other hand, if the authentication in the mobile terminal 10 results in "NG" at step S42, the process goes to step S44. It is determined whether the number of times of "NG" exceeds a predetermined number M at step S44. If it is determined the number of times of "NG" does not exceed M, the process returns to the password input step S41 to provide the chance to re-try the password entry. If it is determineded that the number of times of "NG" exceeds M, the initial registration fails and the registration process is terminated. Therefore, when the initial registration fails, the user should take predetermined initialization procedures and restart the initial registration from the beginning.

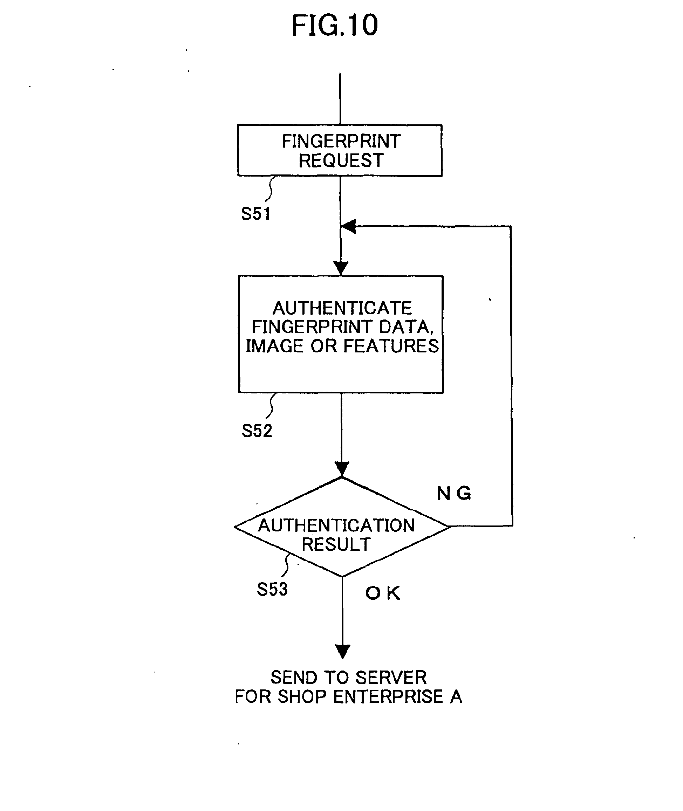

A process for carrying out settlement utilizing e-commerce or mobile banking after completing the fingerprint registration in the server 200 for shop enterprise A will be explained below with reference to FIG. 10. In this part of Example 2, it is assumed that the mobile terminal user orders some goods from the shop enterprise A having a cyber shop on a communication network, and electronically pays or settles for the purchased goods over the communication network.

After the mobile terminal 10 sends a settlement requesting signal to the server 200 for shop enterprise A, the server 200 requests the mobile terminal 10 to provide fingerprint authentication at step S51.
After the fingerprint authentication request is sent to the mobile terminal 10 (S51), the controller 23 collates the fingerprint image input by the user in response to the fingerprint authentication request with the fingerprint image previously registered in the data memory 25. If this collation results in "OK" at step S53, the fingerprint image input into the mobile terminal 10 by the user is sent to the server 200 for shop enterprise A. On the other hand, if the collation result is "NG", the process returns to step S52 to try fingerprint authentication again.

The server 200 for shop enterprise A collates the fingerprint image sent from the mobile terminal 10 with the previously registered fingerprint image. If this authentication gives "OK", the server 200 accepts a predetermined settlement procedure.

As explained above, according to this Example of the present invention, the mobile terminal 10 registers the same fingerprint image as the one sent to the server 200 for shop enterprise A. Therefore, the mobile terminal 10 carries out the fingerprint authentication using the same fingerprint image as the one registered in the server 200 for shop enterprise A. The mobile terminal 10 sends the fingerprint image to the server 200 for shop enterprise A only when the mobile terminal 10 successfully authenticates the fingerprint image. Accordingly the possibility for the server 200 to have an error is lowered.

When the environment surrounding fingerprint authentication is not ideal (for example, having rubbish or dust, or when a user's hands are wet), the possibility of having an error when the server 200 performs authentication is high. In such case, the user has to send his/her fingerprint data to the server again and again, increasing the communication cost. According to this Example of the present invention, sending the fingerprint data again and again can be avoided. And the communication cost problem is solved while individual security can be kept high.

Because registering or changing user data needs high security, for fingerprint authentication it is required to enter into the user registration and change menu (mode). Therefore, only the identical person himself/herself can register and change his/her user data.

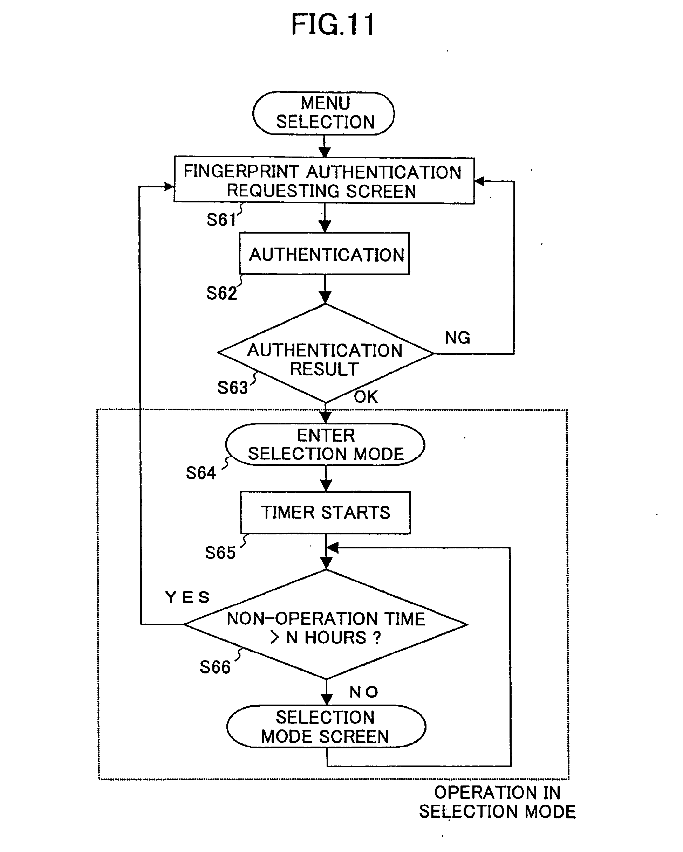

In FIG. 11, the user of the mobile terminal 10 can select fingerprint authentication request in the menu screen. The display 26 shows the fingerprint authentication request screen (S61) and the fingerprint authentication is carried out at step S62. If the authentication result is "OK" at step S63, the process goes to selection menu or selection mode (S64), where user data can be registered and changed. At the same time, the timer 30 for monitoring operation time in the selection mode starts counting (S65). This timer 30 counts non-operation leaving time (time period while the user operates nothing in the mobile terminal 10) within the selection mode. This non-operation leaving time has a maximum limitation, which is referred to as "N hours".

After the successful fingerprint authentication, when the user enters the selection menu, the timer 30 starts counting (S65) and monitors the non-operation leaving time. At step S66, it is determined whether the non-operation leaving time exceeds N hours or not. If it is determined that the non-operation leaving time exceeds N hours, the process goes back to the initial state (S61) (fingerprint authentication request screen). On the other hand, if it is determined that the non-operation leaving time does not exceed N hours, the process goes to the next step, in which the selection menu screen is displayed. The determining step S66 is repeated.

According to the Example 2 of the present invention, if the non-operation leaving time within the selection menu exceeds a predetermined time, the fingerprint authentication is required again. Therefore, by setting the limitation for the non-operation leaving time as an adequate time, it is possible to prevent the mobile terminal 10 from being operated by another person with malicious intent.

The fingerprint authentication explained in the Examples 1 and 2 is not necessarily always carried out successfully, even if the authenticated fingerprint is true and correct. Accordingly, even after the fingerprint authentication gives NG a plurality of times, it may be necessary to allow the user to try the authentication again and again to correctly identify the true individual without lowering the security level.

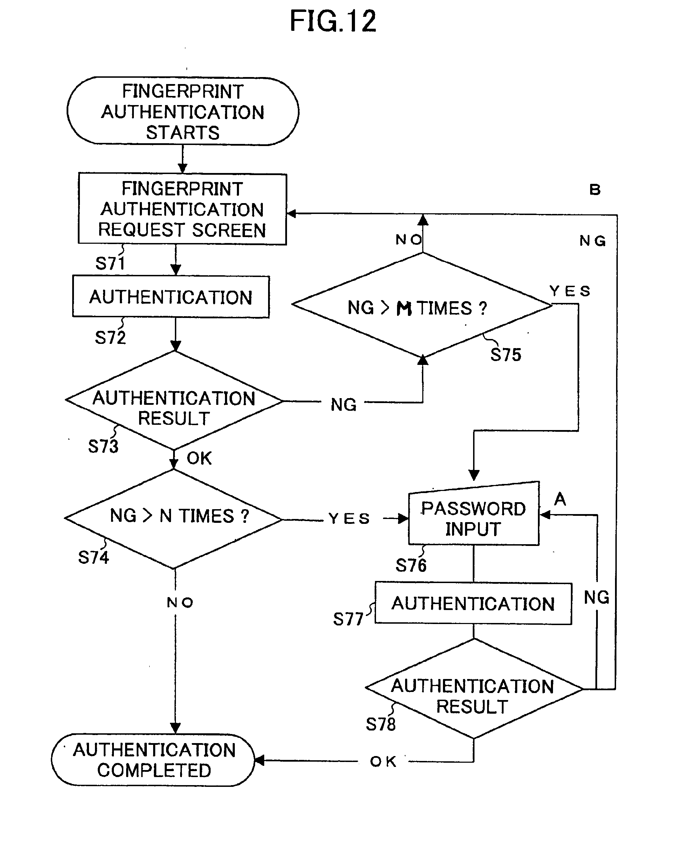

In FIG. 12, the user of the mobile terminal 10 enters the fingerprint authentication request screen (S71), and performs fingerprint authentication (S72). If the fingerprint authentication gives "OK" at step S73, the process goes to step S74, where it is determined how many times the authentication was tried until finally getting OK. If the authentication gave N or more times of NG consecutively, the process goes to step S76, for requiring password authentication (S76 through S78) in addition to the fingerprint authentication. On the other hand, if the authentication did not give N or more times of NG consecutively, the authentication finishes successfully.

When the result of the fingerprint authentication is NG (S73), it is determined whether NG happened consecutively more than a predetermined number of times (M times) at step S75. For example, if NG happened more than M times (S75), the process goes to step S76, where collation is carried out with the previously registered password (S76 through S78). At the step S75, if NG did not happen consecutively more than M times, the process returns to the fingerprint authentication request screen, where the fingerprint authentication will be performed again (S71 through S73).

If the authentication by inputting password (S76) is NG (S78), there are two ways to go. One is to return to step S76 to input the password again (A). The other is to return to the fingerprint authentication request screen at the step S71. The server 200 for shop enterprise A can select A or B.

As explained above, according to this Example of the present invention, even if another person with malicious intent imitates the user's fingerprint and gets OK at the fingerprint authentication step after trying a certain number of times, password authentication is required, and therefore individual authentication security is kept high. And in this example, in the case where the fingerprint authentication gives consecutive NGs for trying many times due to user's wet hand or external noise, the process changes to the password authentication after more than M times of consecutive NG.

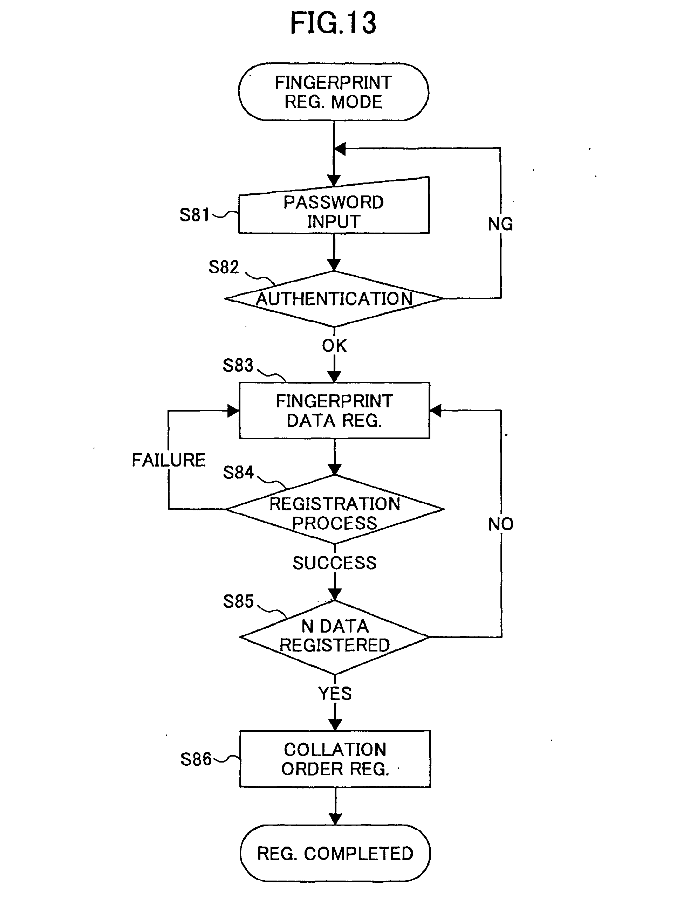

In the above examples, the authentication is done by collating one fingerprint input by the user with one fingerprint previously registered. However, the present invention is not limited to this one-to-one collation. For example, it is possible to collate a plurality of input fingerprints with a plurality of registered fingerprints, that is, a combination of fingerprints can be matched. Alternatively, it is possible to further require that the order of a sequence of fingerprints be matched in addition to the combination match. In this case, the combination and the sequential order can be previously registered in a manner similar to the above example. For example, a plurality of fingerprints can be registered as shown in FIG. 13.

In FIG. 13, the user of the mobile terminal 10 inputs a password at step S81. If the input password is authenticated to be the correct one (authentication OK) at step S82, fingerprints of the user are registered at step S83. If the input password is determined to be wrong (authentication NG), the process returns to password input step S81 to require the user to again input a password.

If the user's fingerprint data are successfully registered (S84) at the fingerprint registration step S83, it is determined whether the number of the registered fingerprint data sets reaches N or not at step S85. If it is determined that the number of the registered fingerprint data sets reaches N, the process goes to step S86. At step S86, the N registered fingerprint data sets are sequentially arranged based on a predetermined collation order and registered with the sequential order at step S86. This collation order can be determined by the user.

On the other hand, if the number of the registered fingerprint data sets does not reach N, the process returns to step S83 to repeat the fingerprint data registration (S83, S84) until the number of the registrations reaches N.

If the user fingerprint data set is not registered correctly (S84) at the fingerprint data registration step S83, the fingerprint data registration process is performed again.

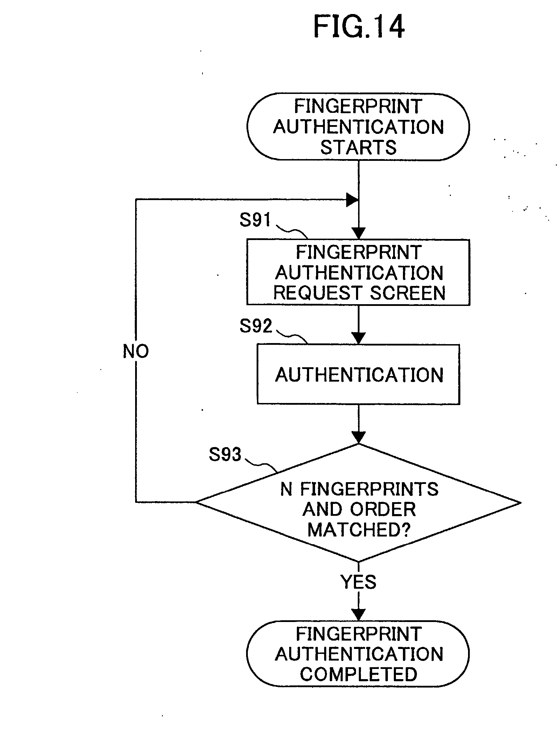

Next, a process for authenticating a plurality of fingerprints will be explained with reference to the flowchart shown in FIG. 14.

In FIG. 14, after the user of the mobile terminal 10 enters a fingerprint authentication request screen at step S91, the system requires the user to input N fingerprints corresponding to the previously registered N fingerprints. It is assumed here that the following plural fingerprint data have been previously registered.
(1) 2 fingerprints (N=2)
(2) Combination: thumb's and little finger's fingerprints
(3) Sequential order: the little finger and then the thumb

If the fingerprint authentication request screen requires the user to input two fingerprints, the user inputs two fingerprints for authentication at step S92. And if a combination and order of the input two fingerprints coincide with the above conditions (1), (2) and (3) (S93), the authentication is completed successfully.

On the other hand, if a combination or order of the input two fingerprints does not coincide with the above conditions, for example if the combination of the inputted two fingerprints (e.g. thumb and the middle finger) is different from the registered condition, or if the sequential order of inputting two fingerprints (thumb then the little finger) is different from the above condition, the process returns to the fingerprint authentication request screen (S91) to require the user to input two fingerprint data sets again.

Because a combination and order of a plurality of fingerprints are considered in this way, comparatively high security is obtained compared to one fingerprint authentication.

In the above examples, the controller 23 of the mobile terminal 10 corresponds to an individual authentication unit, a biometric information authentication unit, a personal identification number (PIN) collation unit, an authentication number determining unit and a biometric information determining unit. A signal transmitting function of the radio unit 21 corresponds to a transmission unit for transmitting the user information and a transmission unit for transmitting the user's biometric information. An information storage function of the data memory 25 corresponds to a biometric information registration unit.

According to the above explained examples of the present invention, user ID and password (or PIN) are read out after biometric information authentication. Therefore high security can be kept while the user ID and password can be obtained easily, and a mobile terminal authentication method reducing the burden of the inputting operation is provided. According to another feature of the examples of the present invention, a mobile terminal able to be authenticated by the above method is provided.

Further, the present invention is not limited to these embodiments and examples, but various variations and modifications may be made without departing from the scope of the present invention.

The present application is based on Japanese priority application No. 2001-191645 filed on 6/25/2001 with the Japanese Patent Office

## Claims

1. A mobile terminal authentication method used for utilizing a service supplied from an information server to a mobile terminal communicating with the information server via a radio path, the mobile terminal authentication method authenticating the mobile terminal based on a user's biometric information by which the information server identifies the mobile terminal, the method comprising:
a registration step for previously registering the user's biometric information in the mobile terminal and the information server;
a first authentication step by the mobile terminal, carrying out an authentication using biometric information representing user's biometric characteristic and read by a reading device, and the previously registered user's biometric information; **characterised in that** it further comprises:
a transmitting step by the mobile terminal, transmitting the user's biometric information read by the reading device to the information server only when the biometric information read by the reading device coincides with the previously registered user's biometric information;
an authentication step by the information server, carrying out a second authentication using the user's biometric information transmitted by the mobile terminal and the previously registered user's biometric information in the information server;
a determining step by the mobile terminal, counting the number of the consecutive failed authentications carried out when the user's biometric information read by the reading device coincides with the previously registered user's biometric information, and determining whether the number of the consecutive failed authentications carried out exceeds a predetermined number; and
a collation step at the mobile terminal, inputting a PIN when the number of the consecutive failed authentications carried out is determined to exceed the predetermined number, and collating the input PIN with a previously registered PIN.

2. The mobile terminal authentication method claimed in Claim 1, wherein,
the mobile terminal previously registers a combination and sequence of a plurality of user's biometric information sets as the user's biometric information;
the mobile terminal carries out the authentication using the previously registered user's biometric information and a plurality of user's biometric information sets read by the reading device; and
the mobile terminal considers the user to be an authorised user when the plurality of user's biometric information sets read by the reading device are determined to coincide with the previously registered user's biometric information.

3. A mobile terminal communicating with an information server via a radio path to utilize a service supplied from the information server, the mobile terminal being authenticated by the information server based on a user's biometric information by which the information server identifies the mobile terminal , the user's biometric information being previously registered in the mobile terminal and the information server, the mobile terminal comprising:
an individual authentication unit for carrying out an authentication using user's biometric information read by a reading device, and the previously registered user's biometric information; and **characterised by** further comprising:
a transmission unit for transmitting the user's biometric information read by the reading device to the information server, for the purpose of authentication in the information server, only when the user's biometric information read by the reading device is considered to coincide with the previously registered user's biometric information;
an authentication number determining unit for counting the number of the consecutive failed authentications carried out when the user's biometric information read by the reading device coincides with the previously registered user's biometric information, and determining whether the number of the consecutive failed authentications carried out exceeds a predetermined number; and
a PIN collation unit for receiving a pin when the number of the consecutive failed authentications carried out is determined to exceed the predetermined number, and collating the received PIN with a previously registered PIN.

4. The mobile terminal claimed in Claim 3, which further comprises,
a biometric information registration unit for registering a combination and sequence of a plurality of user's biometric information sets as the user's biometric information;
a biometric information authentication unit for carrying out the authentication using the previously registered user's biometric information and a plurality of user's biometric information sets read by the reading device; and
a biometric information determining unit for determining whether the plurality of user's biometric information sets read by the reading device coincides with the previously registered user's biometric information.

## Patentansprüche

1. Mobilgeräte-Authentisierungsverfahren zum Nutzen eines von einem Informationsserver über einen Funkweg an ein mit dem Informationsserver in Verbindung stehendes Mobilgerät gelieferten Dienstes, wobei das Mobilgeräte-Authentisierungsverfahren das Mobilgerät basierend auf biometrischen Informationen eines Nutzers, durch welche der Informationsserver das Mobilgerät identifiziert, authentisiert, wobei das Verfahren aufweist:
einen Registrierungsschritt zum Registrieren der biometrischen Informationen des Nutzers im Mobilgerät und im Informationsserver im Voraus;
einen ersten Authentisierungsschritt durch das Mobilgerät, der eine Authentisierung mittels biometrischer Informationen, die ein biometrisches Merkmal des Nutzers darstellen und von einem Lesegerät gelesen werden, und der früher registrierten biometrischen Informationen des Nutzers ausführt,
**dadurch gekennzeichnet, dass** es weiter aufweist:
einen Übertragungsschritt durch das Mobilgerät, der die durch das Lesegerät gelesenen biometrischen Informationen des Nutzers an den Informationsserver nur überträgt, wenn die durch das Lesegerät gelesenen biometrischen Informationen mit den früher registrierten biometrischen Informationen des Nutzers übereinstimmen;
einen Authentisierungsschritt durch den Informationsserver, der eine zweite Authentisierung mittels der von dem Mobilgerät übertragenen biometrischen Informationen des Nutzers und der früher im Informationsserver registrierten biometrischen Informationen des Nutzers ausführt;
einen Bestimmungsschritt durch das Mobilgerät, der die Anzahl der aufeinanderfolgend fehlgeschlagenen Authentisierungsausführungen zählt, wenn die durch das Lesegerät gelesenen biometrischen Informationen des Nutzers mit den früher registrierten biometrischen Informationen des Nutzers übereinstimmen, und
bestimmt, ob die Anzahl der aufeinanderfolgend fehlgeschlagenen Authentisierungsausführungen eine vorbestimmte Zahl übersteigt; und
einen Vergleichsschritt am Mobilgerät, der eine PIN eingibt, wenn die Anzahl der aufeinanderfolgend fehlgeschlagenen Authentisierungsausführungen als die vorbestimmte Anzahl überschreitend bestimmt wird, und die eingegebene PIN mit einer früher registrierten PIN vergleicht.

2. Mobilgeräte-Authentisierungsverfahren nach Anspruch 1, bei welchem
das Mobilgerät im Voraus eine Kombination und eine Abfolge mehrerer biometrischer Informationssätze des Nutzers als die biometrischen Informationen des Nutzers registriert;
das Mobilgerät die Authentisierung unter Verwendung der früher registrierten biometrischen Informationen des Nutzers und mehrerer durch das Lesegerät gelesener biometrischer Informationssätze des Benutzers ausführt; und
das Mobilgerät den Benutzer als einen berechtigten Benutzer betrachtet, wenn die mehreren durch das Lesegerät gelesenen biometrischen Informationssätze des Nutzers als mit den früher registrierten biometrischen Informationen des Nutzers übereinstimmend bestimmt werden.

3. Mobilgerät, das über einen Funkweg mit einem Informationsserver in Verbindung steht, um einen vom Informationsserver gelieferten Dienst zu nutzen, wobei das Mobilgerät durch den Informationsserver basierend auf biometrischen Informationen des Nutzers, durch welche der Informationsserver das Mobilgerät identifiziert, authentisiert wird, wobei die biometrischen Informationen des Nutzers im Voraus im Mobilgerät und im Informationsserver registriert werden, wobei das Mobilgerät aufweist:
eine individuelle Authentisierungseinheit zum Ausführen einer Authentisierung unter Verwendung der durch ein Lesegerät gelesenen biometrischen Informationen des Nutzers und der früher registrierten biometrischen Informationen des Nutzers,
und weiter **gekennzeichnet durch**
eine Übertragungseinheit zum Übertragen der **durch** das Lesegerät gelesenen biometrischen Informationen des Nutzers an den Informationsserver zum Zweck einer Authentisierung in dem Informationsserver nur, wenn die **durch** das Lesegerät gelesenen biometrischen Informationen des Nutzers als mit den früher registrierten biometrischen Informationen des Nutzers übereinstimmend betrachtet werden;
eine Authentisierungsanzahl-Bestimmungseinheit zum Zählen der Anzahl der aufeinanderfolgend fehlgeschlagenen Authentisierungsausführungen, wenn die **durch** das Lesegerät gelesenen biometrischen Informationen des Nutzers mit den früher registrierten biometrischen Informationen des Nutzers übereinstimmen, und
Bestimmen, ob die Anzahl der aufeinanderfolgend fehlgeschlagenen Authentisierungsausführungen eine vorbestimmte Anzahl überschreitet; und
eine PIN-Vergleichseinheit zum Empfangen einer PIN, wenn die Anzahl der aufeinanderfolgend fehlgeschlagenen Authentisierungsausführungen als die vorbestimmte Anzahl überschreitend bestimmt wird, und Vergleichen der empfangenen PIN mit einer früher registrierten PIN.

4. Mobilgerät nach Anspruch 3, das weiter aufweist:
eine Registrierungseinheit biometrischer Informationen zum Registrieren einer Kombination und einer Abfolge mehrerer biometrischer Informationssätze des Nutzers als die biometrischen Informationen des Nutzers;
eine Authentisierungseinheit biometrischer Informationen zum Ausführen der Authentisierung unter Verwendung der früher registrierten biometrischen Informationen des Nutzers und mehrerer durch das Lesegerät gelesener biometrischer Informationssätze des Nutzers; und
eine Bestimmungseinheit biometrischer Informationen zum Bestimmen, ob die mehreren durch das Lesegerät gelesenen biometrischen Informationssätze des Nutzers mit den früher registrierten biometrischen Informationen des Nutzers übereinstimmen.

## Revendications

1. Procédé d'authentification de terminal mobile employé pour utiliser un service fourni depuis un serveur d'information à un terminal mobile communiquant avec le serveur d'information via un trajet radio, le procédé d'authentification de terminal mobile authentifiant le terminal mobile sur la base d'une information biométrique d'un utilisateur par laquelle le serveur d'information identifie le terminal mobile, le procédé comprenant :
une étape d'enregistrement pour enregistrer au préalable l'information biométrique de l'utilisateur dans le terminal mobile et le serveur d'information ;
une première étape d'authentification par le terminal mobile, effectuant une authentification en utilisant une information biométrique représentant une caractéristique biométrique d'utilisateur et lue par un dispositif de lecture, et l'information biométrique de l'utilisateur enregistrée au préalable ;
**caractérisé en ce qu'**il comprend en outre :
une étape de transmission par le terminal mobile, transmettant l'information biométrique de l'utilisateur lue par le dispositif de lecture au serveur d'information uniquement lorsque l'information biométrique lue par le dispositif de lecture coïncide avec l'information biométrique de l'utilisateur enregistrée au préalable ;
une étape d'authentification par le serveur d'information, effectuant une seconde authentification en utilisant l'information biométrique de l'utilisateur transmise par le terminal mobile et l'information biométrique de l'utilisateur enregistrée au préalable dans le serveur d'information ;
une étape de détermination par le terminal mobile, comptant le nombre d'authentifications échouées consécutives effectuées lorsque l'information biométrique de l'utilisateur lue par le dispositif de lecture coïncide avec l'information biométrique de l'utilisateur enregistrée au préalable, et déterminant si le nombre d'authentifications échouées consécutives effectuées dépasse un nombre prédéterminé ; et
une étape de collationnement au niveau du terminal mobile, entrant un PIN lorsque le nombre d'authentifications échouées consécutives effectuées est déterminé dépasser le nombre prédéterminé, et collationnant le PIN entré avec un PIN enregistré au préalable.

2. Procédé d'authentification de terminal mobile revendiqué dans la revendication 1, dans lequel,
le terminal mobile enregistre au préalable une combinaison et séquence d'une pluralité d'ensembles d'informations biométriques d'utilisateur comme l'information biométrique de l'utilisateur ;
le terminal mobile effectue l'authentification en utilisant l'information biométrique de l'utilisateur enregistrée au préalable et une pluralité d'ensembles d'informations biométriques d'utilisateur lue par le dispositif de lecture ; et
le terminal mobile considère l'utilisateur comme étant un utilisateur autorisé lorsque la pluralité d'ensembles d'informations biométriques d'utilisateur lue par le dispositif de lecture est déterminée coïncider avec l'information biométrique de l'utilisateur enregistrée au préalable.

3. Terminal mobile communiquant avec un serveur d'information via un trajet radio pour utiliser un service fourni depuis le serveur d'information, le terminal mobile étant authentifié par le serveur d'information sur la base d'une information biométrique d'un utilisateur par laquelle le serveur d'information identifie le terminal mobile, l'information biométrique de l'utilisateur étant enregistrée au préalable dans le terminal mobile et le serveur d'information, le terminal mobile comprenant :
une unité d'authentification individuelle pour effectuer une authentification en utilisant une information biométrique d'utilisateur lue par un dispositif de lecture, et l'information biométrique de l'utilisateur enregistrée au préalable ; et **caractérisé en ce qu'**il comprend en outre :
une unité de transmission pour transmettre l'information biométrique de l'utilisateur lue par le dispositif de lecture au serveur d'information, aux fins de l'authentification dans le serveur d'information, uniquement lorsque l'information biométrique de l'utilisateur lue par le dispositif de lecture est considérée coïncider avec l'information biométrique de l'utilisateur enregistrée au préalable ;
une unité de détermination du nombre d'authentifications pour compter le nombre d'authentifications échouées consécutives effectuées lorsque l'information biométrique de l'utilisateur lue par le dispositif de lecture coïncide avec l'information biométrique de l'utilisateur enregistrée au préalable, et déterminer si le nombre d'authentifications échouées consécutives effectuées dépasse un nombre prédéterminé ; et
une unité de collationnement de PIN pour recevoir un PIN lorsque le nombre d'authentifications échouées consécutives effectuées est déterminé dépasser le nombre prédéterminé, et collationner le PIN reçu avec un PIN enregistré au préalable.

4. Terminal mobile revendiqué dans la revendication 3, qui comprend en outre,
une unité d'enregistrement d'informations biométriques pour enregistrer une combinaison et séquence d'une pluralité d'ensembles d'informations biométriques d'utilisateur comme l'information biométrique de l'utilisateur ;
une unité d'authentification d'informations biométriques pour effectuer l'authentification en utilisant l'information biométrique de l'utilisateur enregistrée au préalable et une pluralité d'ensembles d'informations biométriques d'utilisateur lue par le dispositif de lecture ; et
une unité de détermination d'informations biométriques pour déterminer si la pluralité d'ensembles d'informations biométriques d'utilisateur lue par le dispositif de lecture coïncide avec l'information biométrique de l'utilisateur enregistrée au préalable.
